# EUROPÄISCHE PATENTSCHRIFT

(11) **EP 2 613 931 B1**
(45) Veröffentlichungstag und Bekanntmachung des Hinweises auf die Patenterteilung: **09.12.2015**
(21) Anmeldenummer: 11764093.8
(22) Anmeldetag: 08.09.2011
(51) Int. Cl.: B30B 9/12, B30B 11/24, B65G 33/26

(54) **FÖRDERSCHNECKE**
CONVEYOR WORM
VIS TRANSPORTEUSE

(30) Priorität: 10.09.2010 DE 202010012454 U
(43) Veröffentlichungstag der Anmeldung: 17.07.2013
(73) Patentinhaber: Doppstadt Familienholding GmbH, 42555 Velbert (DE)
(72) Erfinder: DOPPSTADT, Johann, 42555 Velbert (DE); BERGER, Horst, 39240 Calbe/Saale (DE)
(74) Vertreter: Schulz, Manfred
(86) Internationale Anmeldenummer: PCT/EP2011/004537
(87) Internationale Veröffentlichungsnummer: WO 2012/031766

(56) Entgegenhaltungen:
- DE-C- 203 332
- DE-C- 602 578
- GB-A- 1 241 122
- GB-A- 2 120 195
- US-A- 3 485 341
- US-A- 3 762 537
- US-B1- 6 182 817

## Beschreibung

Die Erfindung betrifft eine Förderschnecke, insbesondere als Förderschnecke in einer Pressschneckenvorrichtung für zu trocknendes Gut, beispielsweise feuchten oder nassen Müll, bestehend aus einer drehbar in der Pressschneckenvorrichtung lagerbaren Welle und wenigstens einem Schneckenwendel, der auf der Welle vorgesehen ist, um das zu trocknende Gut in der Pressschnecke zu fördern.

Die Pressschneckenvorrichtungen, in die die Förderschnecke nach der Erfindung einbaubar ist, sind bekannt. Sie dienen dem Pressen und gleichzeitigen Trocknen von Schüttgut, insbesondere von feuchtem oder nassem Müll. Das zu pressende und zu trocknende Gut wird dabei in eine Einfüllöffnung eingefüllt und von einer Förderschnecke in dem Gehäuse der Pressschneckenvorrichtung gegen einen Presskegel transportiert. Zwischen dem Presskegel und einer Austrittöffnung ist ein Spalt vorgesehen durch den das gepresste und getrocknete Gut austreten kann. Die aus dem gepressten und getrockneten Gut austretende Flüssigkeit wird an dem Hauptgehäuse üblicherweise abgeleitet und das gepresste und getrocknete Gut gelangt vorzugsweise unterhalb des Presskegels entweder in eine Auffangvorrichtung oder aber auf ein Förderband, mit dem es entsprechend abtransportiert wird. Selbstverständlich ist es auch möglich dort entsprechende Behälter vorzusehen, in die das gepresste bzw. getrocknete Gut dann gefüllt wird. Die Förderschnecken in den beschriebenen Pressschneckenvorrichtungen sind einer hohen Belastung aufgrund des zu pressenden und zu trocknenden Gutes ausgesetzt. Insbesondere sind in dem zu pressenden und zu trocknenden Gut gegebenenfalls Verunreinigungen vorhanden, die dazu führen, dass *ein* hoher Verschleiß an dem Schneckenwendel zu verzeichnen ist. Der Schneckenwendel ist, wie bereits weiter vorne erwähnt, auf der Welle der Förderschnecke im Stand der Technik fest angeordnet. In der Regel wird dazu dieser Schneckenwendel auf die Welle direkt aufgeschweißt. Im Fall des Verschleißes müssen dann entweder Aufpanzerungen mit entsprechend mechanischem Aufwand vorgenommen werden, da nach dem Aufschweißen beispielsweise die aufgeschweißten Teile wieder teilweise abgeschliffen werden müssen oder aber der Schneckenwendel ist so verschlissen, dass man ihn komplett von der Welle entfernen muss, um dann einen neuen Schneckenwendel auf der Welle anzubringen. Wie bereits erwähnt, erfolgt dies in der Regel durch Schweißen.

Aus der Druckschrift DE 10 2008 021 935 A1 ist eine Schneckenpresse, wie zuvor beschrieben bekannt, bei der der Kopfteil der Schnecke wechselbar ausgebildet ist. Die in dieser Druckschrift vorgestellte Lösung ist kompliziert und aufwendig in ihrer Herstellung. Der Hauptteil der Schnecke, der ebenfalls nahezu dem gleichen Verschleiß unterliegt, ist ungeschützt. GB 2120195 A1 beschreibt eine Förderschnecke mit den Merkmalen des Oberbegriffs des Anspruchs 1.

Des weiteren ist aus der Druckschrift DE 198 20 044 A1 ein Verschleißschuh für eine Schneckenpresse bekannt. Dieser wird aufwändig hergestellt, nämlich Aufsintem einer Verschleißschicht und dann an den Schneckenwendel angeschweißt. Ist der Verschleißschuh verschlissen muss die gesamte Schnecke neu belegt werden.

Ausgehend von diesem Stand der Technik ist es Aufgabe der Erfindung eine Förderschnecke, insbesondere als Förderschnecke in einer Pressschneckenvorrichtung für zu trocknendes Gut, zur Verfügung zu stellen, die bei Verschleiß leicht auswechselbar ist und die insbesondere die Kosten für die Instandhaltung der Pressschneckenvorrichtung reduziert.

Die Aufgabe der Erfindung wird gelöst durch eine Förderschnecke in einer Pressschneckenvorrichtung für zu trocknendes Gut mit den Merkmalen des Anspruchs 1. Dadurch, dass man beispielsweise ein Basiselement vorsieht, welches von einem Abdeckelement abgedeckt wird, ist der Verschleiß jetzt nur noch an dem Abdeckelement zu verzeichnen und das Basiselement bleibt im Wesentlichen unbeschädigt. Bei einem notwendigen Service kann dann das Abdeckelement von dem Basiselement abmontiert werden und man ersetzt dies durch ein neues Abdeckelement. Die Reparatur ist in wesentlich kürzerer Zeit erledigt, als dies im Stand der Technik zu verzeichnen ist. Die aufwendigen Schweiß- und Schleifarbeiten fallen in der jetzt gefundenen Lösung nicht mehr an. Auch ist es nicht notwendig gegebenenfalls die Welle nach den durchgeführten Schweißarbeiten daraufhin zu prüfen, ob dort eventuell Verzugserscheinungen aufgetreten sind, die zu einer Unwucht der Welle führen. Ein Nachrichten ist ein ebenfalls sehr aufwendiger Prozess, hierauf kann nach der Erfindung komplett verzichtet werden. Auch ist es beispielsweise möglich, dass man wenn das Abdeckelement aus Einzelteilen oder Segmenten besteht, nur entsprechend beschädigte Teile beziehungsweise Segmente des Abdeckelementes ersetzt. Das Basiselement und die anderen nicht beschädigten Abdeckelemente können an der Welle verbleiben. Die Erfindung hat demzufolge wesentliche Vorteile gegenüber den im Stand der Technik bekannten Lösungen und löst das durch die erfindungsgemäße Aufgabe gestellte Problem komplett. Während bei den im Stand der Technik bekannten Lösungen entweder die gesamte Schnecke oder aber zumindest ein ganzer Teil der Schnecke gewechselt werden muss, ist aufgrund der Ausführung mit einem Basis und einem Abdeckelement eine Reparatur auch ohne Demontage der gesamten Schnecke möglich und insbesondere auch nur ein partieller Austausch von stark verschlissenen Abdeckelementen. Dieser Vorteil wird bei einer später noch zu beschreibenden Ausführungsform einer segmentartigen Ausgestaltung noch besser sichtbar.

Demzufolge ist es nach einer Weiterbildung der erfindungsgemäßen Förderschnecke vorgesehen, dass das Abdeckelement wechselbar bzw. austauschbar ausgebildet ist. Dies ist insbesondere dann von Vorteil, wenn der Schneckenwendel von mehreren Teilelementen, zumindest durch das Abdeckelement gebildet wird. Dann ist es möglich nur partiell ein Auswechseln vorzusehen, wenn beispielsweise bestimmte Teile des Schneckenwendels stärker in Mitleidenschaft gezogen sind als andere. Entsprechend ist es nach einer geschickten Ausführungsform der Erfindung vorgesehen, dass zumindest das Abdeckelement segmentartig zusammensetzbar ausgebildet ist. Die Vorzüge die diesbezüglich entstehen, wurden bereits beschrieben.

Ein wesentlicher Aspekt der erfindungsgemäßen Förderschnecke ist dadurch angegeben, dass das Abdeckelement das Basiselement zumindest seitlich einseitig und an der nach außen weisenden Seite abdeckt. Dadurch wird verhindert, dass der Verschleiß beispielsweise an dem Basiselement erfolgt, sondern der Verschleiß wird sich nur an dem Abdeckelement ergeben, wodurch eine hohe Langlebigkeit von Welle mit aufgesetztem Basiselement durch die erfindungsgemäße Lösung erreicht wird.

Die Erfindung zeichnet sich gemäß einer Weiterbildung dadurch aus, dass auch das Basiselement als Aufsatzelement ausgebildet ist. Damit wird erreicht, dass beim Fertigen der erfindungsgemäßen Förderschnecke auch das Basiselement in recht einfacher Form auf die vorbereitete Welle aufgesetzt werden kann. Von besonderem Vorteil ist es dabei, wenn das Basiselement als Aufsatzelement dann mittels einer Schweißverbindung an bzw. auf der Welle befestigbar ist. Dazu hat es in der Regel entsprechende Abfasungen an den Rändern, die im bestimmungsgemäßen Einsatz auf die Welle zuweisen.

Eine Variante der Erfindung schlägt vor, dass das Basiselement lösbar und fest mit der Welle verbindbar ist. In dieser Variante verbindet man die Vorzüge des austauschbaren Abdeckelementes hier mit den Vorzügen, dass das Basiselement ebenfalls austauschbar ist, indem es lösbar und fest mit der Welle verbunden ist. Dabei wird für den Fall, dass z. B. gröberes bzw. stärker verunreinigtes Gut gepresst werden muss, auch trotz der Abdeckung mit einem Abdeckelement an dem Basiselement noch Beschädigungen entstehen können. Für einen solchen Fall einer Beschädigung ist dann auch das Basiselement relativ leicht von der Welle zu entfernen und kann problemlos ausgetauscht werden.

Eine Weiterbildung der zuvor beschriebenen Lösung schlägt vor, dass das Basiselement vorzugsweise nur abschnittweise auf der Welle anzuordnen ist. Der Sinn dieser Ausgestaltung ist der, dass man Material einsparen kann, indem man das Basiselement nur abschnittweise auf der Welle anordnet. Das Abdeckelement bildet selbstverständlich eine vollständig durchlaufende Förderschnecke für das zu pressende Gut. Demzufolge sind dann nicht mehr so viele Basiselement auf der Welle vorgesehen, was zu einer Materialeinsparung führt. Außerdem wird auch im bestimmungsgemäßen Einsatz die Förderschnecke leichter bewegbar, da sie nicht mehr ein so hohes Gewicht aufweist.

Von Vorteil ist es, wenn an dem Basiselement wenigstens ein Fixierzapfen vorgesehen ist. Mittels des oder der Fixierzapfen ist dann das Basiselement leicht in dafür auf der Welle vorgesehene korrespondierende Bohrungen oder Nuten einsetzbar beziehungsweise aufsetzbar und kann problemlos ausgerichtet werden. Damit wird eine Erleichterung beim Herstellungsprozess der erfindungsgemäßen Förderschnecke erreicht.

Das Basiselement ist nach der Erfindung aus Metall, vorzugsweise aus Stahlblech, gebildet. Dies schließt allerdings nicht aus, dass das Basiselement auch als Gusselement ausgebildet ist. Eine Ausgestaltung als Gusselement bietet sich immer dann an, wenn beispielsweise das Basiselement als Aufsatzelement ausgebildet ist und lösbar und fest mit der Welle verbunden ist. Bei einem zu schweißenden Basiselement ist Guss nicht geeignet, da sich Guss nicht mit Stahl verschweißen lässt.

Die Erfindung schlägt vor, dass zur Verbindung des Basiselementes mit dem Abdeckelement zueinander korrespondierende Verbindungsschnittstellen vorgesehen sind. Diese Verbindungsschnittstellen sind so, dass bei einem Ansetzen oder Aufsetzen des Abdeckelementes diese genau zueinander passen, so dass man beispielsweise Bohrungen in beiden Elementen hat, die mittels einer entsprechenden Maschinenschraube miteinander verbunden werden.

Demzufolge zeichnet sich eine Weiterbildung der Erfindung dadurch aus, dass die Verbindungsschnittstelle durch wenigstens eine Schraubverbindung mit entsprechenden Bohrungen in Basiselement und Abdeckelement angegeben ist.

Erfindungsgemäß wurde weiter gefunden, dass es von Vorteil ist, wenn Basiselement und Abdeckelement zumindest eine formschlüssige Verbindung zusätzlich oder alternativ zur Verbindungsschnittstelle aufweisen, die im Einbauzustand zueinander korrespondieren und den Formschluss herstellen. Von besonderem Vorzug ist es also, wenn die Verbindungsschnittstelle als Schraubverbindung vorgesehen ist und zusätzlich mindestens eine weitere, zusätzliche formschlüssige Verbindung vorgesehen ist. Dabei kann man geschickterweise die formschlüssige Verbindung so anordnen, dass sie gemeinsam mit der Verbindungsschnittstelle wirkt, indem beispielsweise entsprechende Noppen, Federn oder Bolzen an einem der Elemente, Basiselement oder Abdeckelement, vorgesehen sind und an dem anderen der Elemente dann eine entsprechende passende Vertiefung, wie z. B. eine Ausnehmung, eine Bohrung oder eine Nut. Die Bohrung ist dabei bevorzugterweise als Grundbohrung auszubilden, die nicht vollständig durch das Element führt.

Von Vorteil ist es dabei, wenn die formschlüssige Verbindung durch hutförmige Erhöhungen auf einem der Elemente und durch entsprechende Ausnehmungen auf dem anderen der Elemente angegeben ist.

Eine besonders vorteilhafte Ausgestaltung der zusätzlichen formschlüssigen Verbindung ist dadurch angegeben, dass an dem Basiselement ein nach außen weisendes offenes "U" oder als nach oben offene Nut angegeben ist, in die die hutförmige Erhöhung einlegbar bzw. einschiebbar ist. Nun ist man in der Lage das Abdeckelement beispielsweise von außen bzw. von oben direkt auf das Basiselement aufzusetzen. Die Montage wird dadurch erleichtert.

Alternativ kann selbstverständlich die formschlüssige Verbindung entsprechend einer Weiterbildung durch eine Nut- und Federverbindung oder durch Stifte, Bolzen oder dergleichen angegeben werden. Die Erfindung ist hier nicht auf eine einzige Ausführungsform eingeschränkt.

Eine Förderschnecke, wie zuvor beschrieben, zeichnet sich entsprechend der Erfindung dadurch aus, dass an der Verbindungsstelle von mindestens zwei aneinander stoßenden Basiselementen ein in Form eines spitzwinkligen Dreiecks ausgebildeter Ansatz vorgesehen ist. Dieser Ansatz wird dann an einem an dem Abdeckelement vorgesehenen korrespondierenden Dreieck abgedeckt, so dass hier ein weiterer Formschluss entsteht. Insbesondere ist dadurch gewährleistet, dass die auf das Abdeckelement einwirkende Kraft sicher auf die Welle über das Basiselement übertragen werden kann. Dieser ausgebildete Ansatz ist im Übrigen ohne weitere Fertigungsprobleme bei der Herstellung der Förderschnecke nach der Erfindung erzeugbar, indem beispielsweise die Basiselement abschnittsweise als Aufschweißbleche auf die Welle gesetzt werden. Aufgrund der Steigung des Schneckenwendels bzw. der Schnecke ergeben sich diese Absätze dann automatisch, wenn man die Basiselemente nicht der Form des Schneckenwendels anpasst. Dies geschieht dann, wie bereits erwähnt, durch die Abdeckelemente, die dort einen entsprechenden Absatz bzw. Ansatz aufweisen. Dies führt dann zu den beiden Vorteilen , dass fertigungstechnisch die Basiselemente wesentlich einfacher zu erhalten sind und gleichzeitig ein besserer Eintrag der Kräfte von dem Abdeckelement in die Welle über das Basiselement erfolgen kann.

Demzufolge zeichnet sich eine Ausgestaltung der zuvor beschriebenen Variante dadurch aus, dass an der gegenüberliegenden Seite des Ansatzes, die beim bestimmungsgemäßen Einsatz von dem Abdeckelement abgedeckt ist, eine Mitnahmefläche vorgesehen ist, an der sich ein Segment eines Abdeckelementes beim Fördern des zu pressenden Gutes abstützt. Dabei kann in dem Abdeckelement die Mitnahmefläche so ausgebildet sein, dass sie sich am Ende des Segmentes befindet. Es kann allerdings auch so konstruktiv gestaltet werden, dass sie sich beispielsweise an irgendeiner Stelle des Abdeckelementes außer am Ende befindet und dass dann die entsprechend anzusetzenden nächsten Segmente des Abdeckelementes korrespondierend dazu ausgeführt sind. Auf der Seite, auf der das zu fördernde bzw. zu pressende Gut sich bewegt bzw. gepresst wird, ist der Schneckenwendel mit den Abdeckelementen sehr glatt und ohne durch die Bearbeitung entstehende Lücken ausgeführt, so dass das zu pressende Gut ohne Weiteres und ohne irgendwelche Rückstände zu hinterlassen, durch die Schnecke gefördert werden kann.

Von Vorteil ist es auch, wenn das Abdeckelement einen Überstand aufweist, der das Basiselement beim bestimmungsgemäßen Einsatz überdeckt und damit schützt. Dieser Überstand kann in der einfachsten Ausgestaltung als flanschartiger Ansatz vorgesehen sein. Selbstverständlich kann dieser Überstand auch so ausgebildet werden, dass er das Basiselement zumindest an der äußeren Seite vollständig umfasst.

Um den Materialfluss zu begünstigen, ist an dem Abdeckelement auf dem beim Einbau von dem Basiselement wegweisenden Seite eine Ausformung vorgesehen, die zur Welle hin ausläuft. Diese Ausformung ist bevorzugt als Abrundung ausgebildet und läuft in Förderrichtung spitz aus. Damit wird eine Verbesserung des Materialtransportes innerhalb der Schnecke erreicht.

Die Erfindung stellt auch eine Pressschneckenvorrichtung zur Verfügung, die wenigstens eine Förderschnecke, wie vorher beschrieben, aufweist.

Die Erfindung wird nachfolgend anhand von Ausführungsbeispielen weiter beschrieben.

Es zeigen:
- Fig. 1: Ansicht einer Ausführungsform der erfindungsgemäßen Förderschnecke entgegen der Förderrichtung,
- Fig. 2: Ausführungsform nach Fig. 1 von der Förderrichtungsseite aus betrachtet,
- Fig. 3: Ausschnitt eines Teiles der Förderschnecke mit den Elementen des Schneckenwendels
- Fig. 4: weitere Abschnitt der erfindungsgemäßen Förderschnecke mit nur teilweise aufgesetztem Abdeckelement,
- Fig. 5 u. Fig. 6: Abdeckelement nach der Erfindung aus zwei unterschiedlichen Richtungen betrachtet,
- Fig. 7: Basiselement nach der Erfindung.

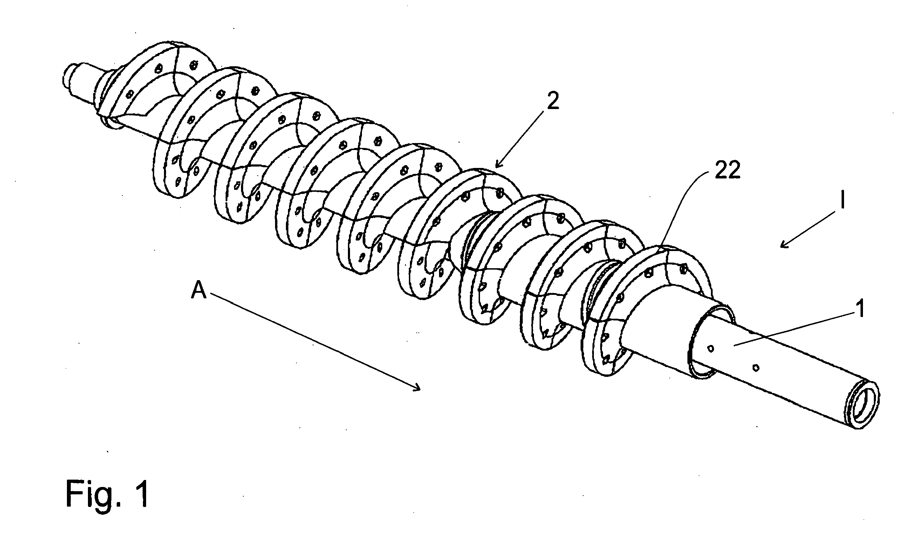

Eine erfindungsgemäße Förderschnecke I ist in Fig. 1 aus Richtung entgegen einer Förderrichtung A dargestellt. Es handelt sich dabei um eine dreidimensionale Darstellung, bei der ersichtlich wird, dass auf einer Welle 1 ein Schneckenwendel 2 ausgebildet ist. Auf der Welle 1 ist dabei ein stärker im Durchmesser ausgeführter Wellenabschnitt ersichtlich, der nicht näher bezeichnet wurde. Dieser kann beispielsweise auch als aufgesetztes Rohr ausgebildet sein. Allerdings ist es bei den Pressschneckenvorrichtungen der Anmelderin üblich, an der den Rohrabschnitt zeigenden Seite eine Art Labyrinthdichtung auszubilden, an der der Presskegel beispielsweise anschließt. Dies ist allerdings hier nicht dargestellt, da es für die Erfindung nicht wesentlich ist. Der Schneckenwendel 2 wird gebildet, von der in der Fig. 1 nicht sichtbaren Basiselementen 21 und Abdeckelementen 22. Diese Abdeckelemente 22 sind so auf dem Basiselement 21 aufgesetzt, dass es dieses zumindest an der Vorderseite des Schneckenwendels 2 und an der nach außen weisenden Seite vollständig abdeckt.

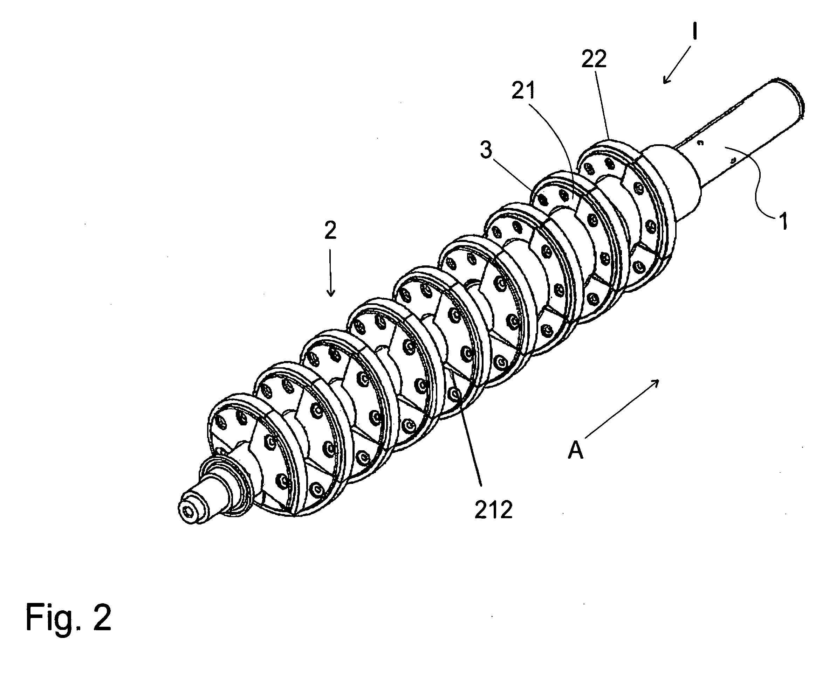

Die Fig. 2 zeigt die Förderschnecke I nach der Erfindung analog der Darstellung von Fig. 1, allerdings hier genau aus der entgegengesetzten Richtung, nämlich aus Richtung der Förderrichtung A betrachtet. Zu dieser Ansicht werden nun auch die Basiselemente 21 sichtbar, die , wie ersichtlich, in Form von einzelnen Segmenten um die Welle herum angeordnet sind, so dass sich der Schneckenwendel bildet. Dabei sind die einzelnen Basiselementabschnitte so versetzt gegeneinander, dass ein Ansatz 212 entsteht, jeweils an der Nahtstelle zwischen zwei aneinander stoßenden Basiselementen 21. Dies kann z. B. daraus resultieren, dass die Basiselementsegmente aus einzelnen Blechen hergestellt sind, die dann entsprechend versetzt auf der Welle 1 aufgeschweißt werden, um den Schneckenwendel zu bilden. Über die Basiselemente 21 werden die Abdeckelemente 22 gesteckt oder geführt, so dass eine durchgehende Schnecke, wie in Fig. 1 sehr schön ersichtlich, entsteht, die keine Ansätze aufweist. Der Vorteil dieser Ausgestaltung ist fertigungstechnisch zum Einen, dass sich die Basiselemente 21 deutlich einfacher herstellen lassen und auch entsprechend günstiger auf der Welle 1 zu befestigen sind. Zum Anderen ist es vorteilhaft, dass man gleichzeitig einen dritten Formschluss erhält der daraus resultiert, dass man in dem Abdeckelement 22 in den Abbildungen nicht ersichtliche Mitnahmegegenflächen ausbildet, die die auf die Schnecke eingetragene Kraft beim Pressvorgang sicher über das Basiselement 21 auf die Welle 1 abführen.

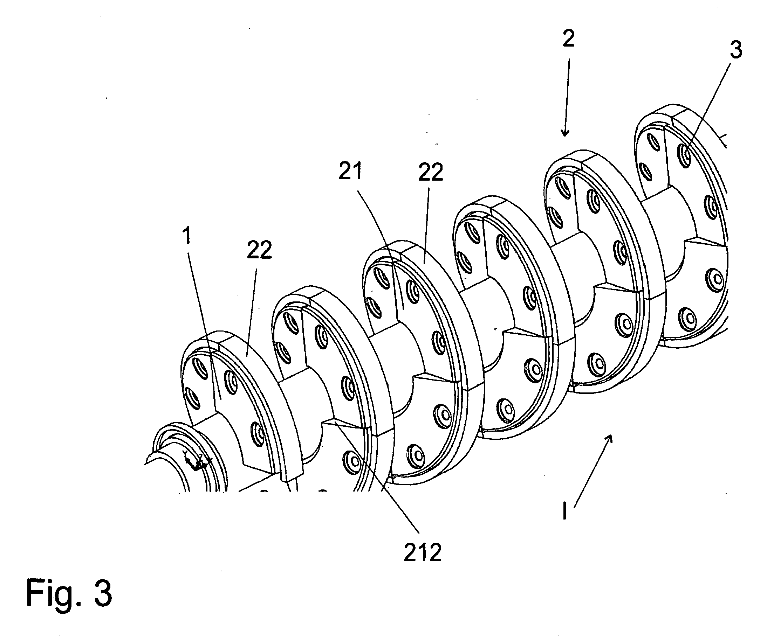

Die Fig. 3 zeigt einen Wellenabschnitt der Welle 1 mit aufgesetzten Basiselementen 21 und aufgesetzten Abdeckelementen 22. Sehr schön ersichtlich ist, dass die Abdeckelemente 22 und die Basiselemente 21 mittels einer Schnittstelle 3 miteinander verbunden werden, die beispielsweise - wie ersichtlich - durch eine Schraubverbindung angegeben ist. Das heißt an der Schnittstelle 3 werden in die dort vorgesehenen Bohrungen nicht dargestellte Schrauben geführt und für den Endzustand miteinander verschraubt. Günstigerweise wird man die Schrauben mit entsprechenden Sicherungen versehen, wie z. B. selbsthemmenden Muttern, Federriemen oder dergleichen. Die Darstellung gemäß der Fig. 3 entspricht dabei der Sichtweise, beziehungsweise der Richtung, die in Fig. 2 dargestellt ist.

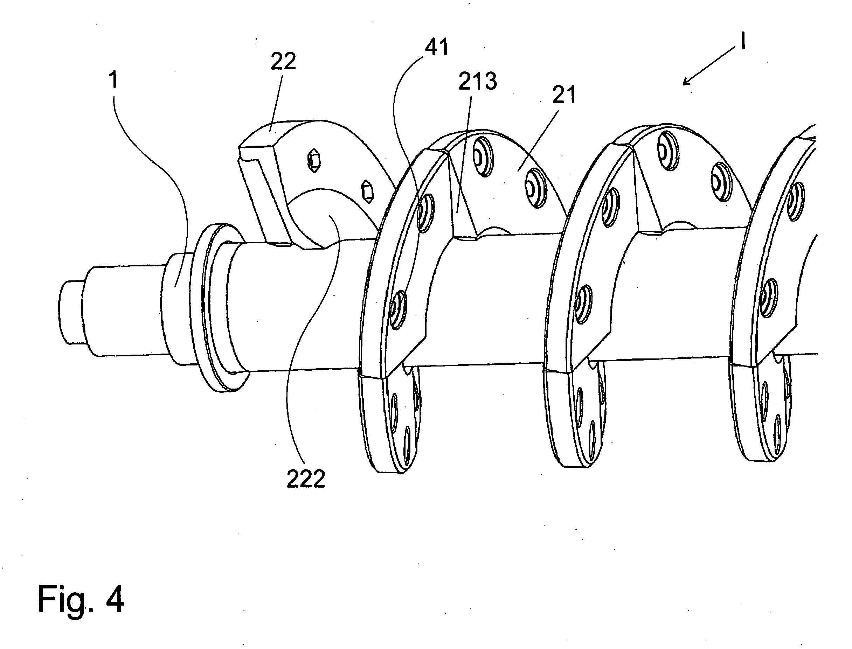

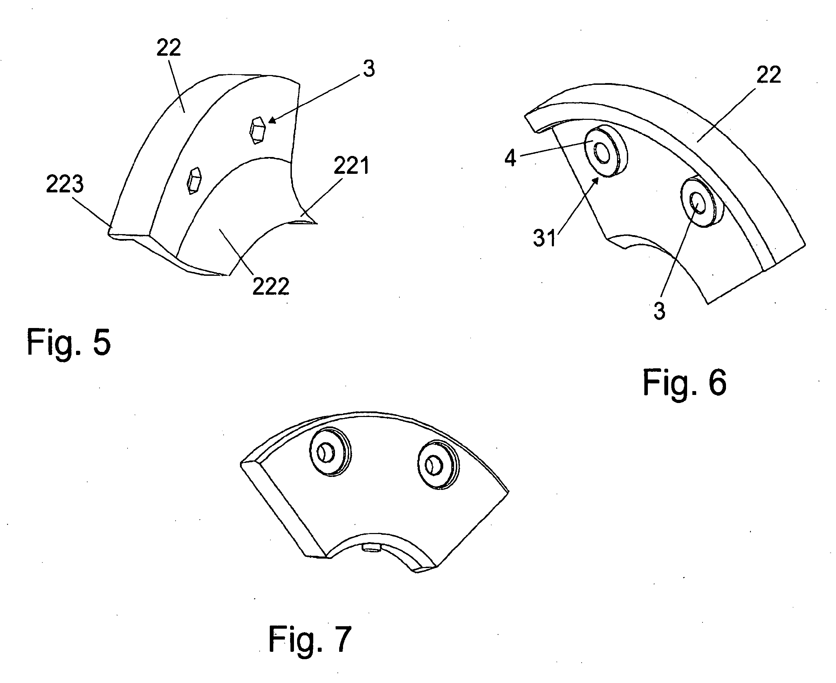

In der Fig. 4 wird nun ein Wellenabschnitt der Welle 1 mit nur teilweisen angeordnetem Abdeckelement 22 dargestellt. Aus dieser Fig. ist ersichtlich, dass die Basiselemente 21 so aneinander gereiht sind, dass die bereits beschriebene Mitnahmefläche 213 an der jeweiligen Anschlussstelle der Basiselemente zueinander entsteht. Die Erfindung umfasst geschickterweise einen weiteren Formschluss als formschlüssige Verbindung 31. Diese formschlüssige Verbindung 31 ist in der dargestellten Ausführungsform zusätzlich zu der Verbindungsschnittstelle 3 vorhanden und zwar zweimal je Segment. Die dargestellte formschlüssige Verbindung 31 ist dabei durch hutförmige Erhöhungen 4 (siehe Fig. 6) und entsprechende Ausnehmungen 41, wie in Fig. 4 ersichtlich gebildet. Die hutförmigen Erhöhungen 4 sind beispielsweise auf dem Abdeckelement 22 vorgesehen und greifen in die entsprechenden Ausnehmungen 41 auf dem Basiselement 21 ein. Selbstverständlich kann auch die genau umgekehrte Ausführungsform gewählt werden, bei der die hutförmigen Erhöhungen auf dem Basiselement 21 und die entsprechenden Ausnehmungen 41 auf dem Abdeckelement 22 vorgesehen sind. In der Fig. 4 ist nur ein Abdeckelement 22 ersichtlich. An diesem Abdeckelement ist eine sich zur Welle 1 hin erstreckenden Ausformung 220 vorgesehen, die zur Welle hin ausläuft. Sehr schön ersichtlich ist dabei in Fig. 5, dass die Ausformung 220 als Abrundung ausgebildet ist und in Förderrichtung A spitz ausläuft. Die Spitze ist in Fig. 5 mit 221 bezeichnet.

Die Fig. 5 und 6 zeigen das Abdeckelement 22 für die Förderschnecke nach der Erfindung aus zwei unterschiedlichen Richtungen. So ist das Abdeckelement 22 von der Seite aus ersichtlich, die beim bestimmungsgemäßen Einsatz die Förderseite, das heißt die Seite bildet, auf der das Gut sich gegen Presskegel bewegt. In Fig. 6 ist die Seite dargestellt, die beim bestimmungsgemäßen Einsatz an dem Basiselement 21 anliegt. Demzufolge ist diese Seite nach der Montage bzw. beim bestimmungsgemäßen Einsatz nicht ersichtlich.

Die Fig. 7 zeigt ein Basiselement 21, welches einen Fixierzapfen 210 auf der der Welle zugewandten Seite aufweist. Mittels dieses Fixierzapfens wird das Aufsatzelement 21 auf die Welle gesetzt und dort ausgerichtet. Dazu befinden sich auf der Welle 1 korrespondierende Bohrungen oder Nuten, die zur Ausrichtung dienen. Das Bezugszeichen 5 bezeichnet die Bohrung als Teil der Verbindungsstelle 3, die sowohl am Basiselement 21 als auch am Abdeckelement 22 korrespondieren jeweils zueinander vorgesehen sind. In der Fig. 5 ist noch ersichtlich, dass an dem Abdeckelement ein Überstand 223 vorgesehen ist, der das Basiselement 21 beim bestimmungsgemäßen Einsatz überdeckt und damit schützt. Gemäß einer nicht dargestellten Variante der Erfindung kann die in Fig. 7 gezeigte Ausführungsform so ausgebildet sein, dass die Ausnehmung 41 durch ein nach außen weisendes offenes "U" oder als eine nach oben offene Nut vorgegeben ist, in die dann die hutförmige Erhöhung 4 einlegbar ist. Eine solche Ausgestaltung würde dann auch eine Ausführungsform von dem Abdeckelement 22 erlauben, bei der der Überstand ebenfalls U-förmig oder U-artig ausgebildet ist, so dass das Basiselement von beiden Seiten zumindest teilweise geschützt wird.

Die Erfindung wurde zuvor anhand von Ausführungsbeispielen beschrieben. Die Erfindung ist jedoch darauf nicht beschränkt. Die jetzt und mit der Anmeldung später eingereichten Ansprüche sind Versuche zur Formulierung ohne Präjudiz für die Erzielung eines weitergehenden Schutzes.

Die in den abhängigen Ansprüchen angeführten Rückbeziehungen weisen auf die weitere Ausbildung des Gegenstandes des Hauptanspruchs durch die Merkmale des jeweiligen Unteranspruches hin. Jedoch sind diese nicht als ein Verzicht auf die Erzielung eines selbstständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Förderschnecke für eine Pressschneckenvorrichtung für zu trocknendes Gut, beispielsweise feuchten oder nassen Müll, bestehend aus einer drehbar in der Pressschneckenvorrichtung lagerbaren Welle (1) und wenigstens einem Schneckenwendel (2), der auf der Welle (1) vorgesehen ist, um das zu trocknende Gut in der Pressschnecke zu fördern wobei der Schneckenwendel (2) aus wenigstens zwei Elementen, nämlich aus einer Reihe von segmentartig ausgebildeten Basiselementen (21) und enigstens einem Abdeckelement (22) gebildet ist und zumindest eines der Elemente des Schneckenwendels (2) wechselbar bzw. abnehmbar ausgebildet ist, **dadurch gekennzeichnet, dass** an der Verbindungsstelle von wenigstens zwei aneinanderstoßenden Basiselementen (21) ein in Form eines spitzwinkligen Dreiecks ausgebildeter Ansatz (212) vorgesehen ist.

2. Förderschnecke nach Anspruch 1, **dadurch gekennzeichnet, dass** das Abdeckelement (22) wechselbar bzw. austauschbar ausgebildet ist und/oder zumindest das Abdeckelement (22) segmentartig, zusammensetzbar ausgebildet ist.

3. Förderschnecke nach einem der vorhergehenden Ansprüche, **dadurch gekennzeichnet, dass** das Abdeckelement (22) das Basiselement (21) zumindest seitlich einseitig und an der nach Außen weisenden Seite (211) abdeckt.

4. Förderschnecke nach einem der vorhergehenden Ansprüche, **dadurch gekennzeichnet, dass** das Basiselement (21) als Aufsatzelement ausgebildet ist, bevorzugt das Basiselement (21) als Aufsatzelement ausgebildet ist, welches mittels einer Schweißverbindung an bzw. auf der Welle (1) befestigbar ist.

5. Förderschnecke nach einem der vorhergehenden Ansprüche, **dadurch gekennzeichnet, dass** das Basiselement (21) lösbar und fest mit der Welle (1) verbindbar ist,

6. Förderschnecke nach einem der vorhergehenden Ansprüche, **dadurch gekennzeichnet, dass** an dem Basiselement (21) wenigstens ein Fixierzapfen (210) vorgesehen ist, insbesondere das Basiselement (21) aus Metall, vorzugsweise aus Stahlblech oder als Gusselement ausgebildet ist.

7. Förderschnecke nach einem der vorhergehenden Ansprüche, **dadurch gekennzeichnet, dass** Basiselement (21) und Abdeckelement (22) zueinander korrespondierende Verbindungsschnittstellen (3) aufweisen.

8. Förderschnecke nach Anspruch 7, **dadurch gekennzeichnet, dass** die Verbindungsschnittstelle (3) durch wenigstens eine Schraubverbindung mit entsprechenden Bohrungen (5) in Basiselement (21) und Abdeckelement (22) angegeben ist.

9. Förderschnecke nach einem der vorhergehenden Ansprüche 7 und 8, **dadurch gekennzeichnet, dass** Basiselement (21) und Abdeckelement (22) zumindest eine formschlüssige Verbindung (31) zusätzlich oder alternativ zur Verbindungsschnittstelle (3) aufweisen, die im Einbauzustand zueinander korrespondieren, um den Formschluss herzustellen, wobei die formschlüssige Verbindung (31) bevorzugt durch hutförmige Erhöhungen (4) auf einem der Elemente (21, 22) und durch entsprechende Ausnehmungen (41) auf dem anderen der Elemente (21, 22) angegeben ist.

10. Förderschnecke nach Anspruch 9, **dadurch gekennzeichnet, dass** die formschlüssige Verbindung (31) an dem Basiselemente (21) durch ein zur nach Außen weisenden Seite (211) offenes U oder als nach oben offene Nut angegeben ist, in die die hutförmige Erhöhung (4) einlegbar bzw. einschiebbar ist.

11. Förderschnecke nach einem der vorhergehenden Ansprüche 9 und 10, **dadurch gekennzeichnet, dass** die formschlüssige Verbindung (31) durch eine Nut- und Federverbindung oder durch Stifte, Bolzen oder dergleichen angegeben ist.

12. Förderschnecke nach einem der vorhergehenden Ansprüche, **dadurch gekennzeichnet, dass** an der gegenüberliegenden Seite des Ansatzes (212) am Basiselement (21), die beim bestimmungsgemäßen Einsatz von dem Abdeckelement (22) abgedeckt ist, eine Mitnahmefläche (213) vorgesehen ist, an der sich ein Segment eines Abdeckelementes (22) beim Fördern des zu pressenden Gutes abstützt.

13. Förderschnecke nach einem der vorhergehenden Ansprüche, **dadurch gekennzeichnet, dass** das Abdeckelement (22) einen Überstand (223) aufweist, der das Basiselement (21) beim bestimmungsgemäßen Einsatz überdeckt und damit schützt und/oder an dem Abdeckelement (22) auf der beim Einbau von dem Basiselement (21) wegweisenden Seite eine Ausformung (222) vorgesehen ist, die zur Welle (1) hin ausläuft.

14. Förderschnecke nach Anspruch 13, **dadurch gekennzeichnet, dass** die Ausformung (222) als Abrundung ausgebildet ist und in Förderrichtung (A) spitz ausläuft.

15. Pressschneckenvorrichtung für zu trocknendes Gut, beispielsweise feuchten oder nassen Müll mit wenigstens einer Förderschnecke (I) nach einem der vorhergehenden Ansprüche.

## Claims

1. Screw conveyor for a screw press device for material to be dried, such as for example moist or wet garbage, consisting of a rotatable shaft (1) that can be supported in the screw press device, and at least one screw helix (2) provided on the shaft (1) for conveying the material to be dried in the screw press, wherein the screw helix (2) is formed from at least two elements, namely a row of segment-like configured basic elements (21) and at least one cover element (22), and at least one of the elements of the screw helix (2) is configured such that it can be changed and/or removed, **characterized in that** at the connection point of at least two abutting basic elements (21) an attachment (212) formed like an acute triangle is provided.

2. Screw conveyor according to claim 1, **characterized in that** the cover element (22) is configured such that it can be exchanged and/or removed, and/or at least the cover element (22) is configured segment-like such that it can be assembled.

3. Screw conveyor according to one of the preceding claims, **characterized in that** the cover element (22) covers the basic element (21) at least laterally on one side and at the side (211) facing outwards.

4. Screw conveyor according to one of the preceding claims, **characterized in that** the basic element (21) is configured as top element, preferably the basic element (21) is configured as top element that can be attached to or at the shaft (1) by means of a welded joint.

5. Screw conveyor according to one of the preceding claims, **characterized in that** the basic element (21) can be connected to the shaft (1) releasably and fixedly.

6. Screw conveyor according to one of the preceding claims, **characterized in that** at the basic element (21) at least one attachment pin (210) is provided, in particular the basic element (21) is formed from metal, preferably steel sheet or as cast element.

7. Screw conveyor according to one of the preceding claims, **characterized in that** basic element (21) and cover element (22) have corresponding connecting interfaces (3).

8. Screw conveyor according to claim 7, **characterized in that** the connecting interface (3) is realized by at least one screw connection with appropriate bore holes (5) in basic element (21) and cover element (22).

9. Screw conveyor according to any of the preceding claims 7 and 8, **characterized in that** basic element (21) and cover element (22) have at least a positive locking connection (31) additionally or alternatively to the connecting interface (3) corresponding, when installed, in order to create the positive interlocking, wherein the positive locking connection (31) is preferably realized by hat-shaped elevations (4) on one of the elements (21, 22) and by appropriate recesses (41) on the other one of the elements (21, 22).

10. Screw conveyor according to claim 9, **characterized in that** the positive locking connection (31) at the basic element (21) is realized by a U open to the side (211) facing outwards, or as groove open on top in which the hat-shaped elevation (4) can be inserted and/or slid in.

11. Screw conveyor according to any of the preceding claims 9 and 10, **characterized in that** the positive locking connection (31) is realized by a tongue and groove connection, or by pins, bolts or the like.

12. Screw conveyor according to one of the preceding claims, **characterized in that** at the opposite side of the attachment (212) at the basic element (21), covered by the cover element (22) when used as intended, a drive surface (213) is provided where a segment of a cover element (22) is supported during conveying the material to be pressed.

13. Screw conveyor according to one of the preceding claims, **characterized in that** the cover element (22) has a protrusion (223) covering and thus protecting the basic element (21) when used as intended, and/or at the cover element (22) on the side opposite the basic element (21) during installation a shaping (222) tapering in the direction of the shaft (1) is provided.

14. Screw conveyor according to claim 13, **characterized in that** the shaping (222) is configured as rounding and ends in a point in the direction of conveying (A).

15. Screw conveyor device for material to be dried, such as for example moist or wet garbage with at least one screw conveyor (I) according to one of the preceding claims.

## Revendications

1. Vis sans fin de transport destinée à un dispositif à vis de compression pour de la matière à sécher, par exemple des déchets humides ou mouillés, consistant en un arbre rotatif (1) pouvant être maintenu à l'intérieur d'un dispositif à vis de compression et en au moins une hélice sans fin (2) située sur l'arbre (1) et permettant de transporter la matière à sécher vers l'intérieur de la vis de compression et consistant en au moins deux types d'éléments, à savoir en une série d'éléments de base (21) en forme de segments et en au moins un élément couvrant (22) et avec au moins un des éléments de l'hélice sans fin (2) pouvant être amovible ou échangeable, **caractérisée en ce qu'**un raccord (212) en forme d'un triangle à angle pointu est prévu au niveau du point d'interconnexion entre au moins deux éléments de base se touchant (21).

2. Vis sans fin de transport selon la revendication 1, **caractérisée en ce que** l'élément couvrant (22) est configuré de façon amovible et échangeable et/ou **en ce qu'**au moins l'élément couvrant (22) peut être composé d'un ou plusieurs segments.

3. Vis sans fin de transport selon une des revendications précédentes, **caractérisée en ce que** l'élément couvrant (22) couvre l'élément de base (21) au moins latéralement au niveau de la face orientée vers l'extérieur (211).

4. Vis sans fin de transport selon une des revendications précédentes, **caractérisée en ce que** l'élément de base (21) est configuré comme un embout, de préférence **en ce que** l'élément de base (21) est un embout pouvant être fixé sur l'arbre (1) par une soudure.

5. Vis sans fin de transport selon une des revendications précédentes, **caractérisée en ce que** l'élément de base (21) peut être fixé sur l'arbre (1) de façon amovible et rigide.

6. Vis sans fin de transport selon une des revendications précédentes, **caractérisé en ce qu'**au moins une goupille de fixation (210) est prévue au niveau de l'élément de base (21) et **en ce qu'**en particulier l'élément de base (21) est fabriqué en métal et de préférence en tôle ou en fonte.

7. Vis sans fin de transport selon une des revendications précédentes, **caractérisée en ce que** l'élément de base (21) et l'élément couvrant (22) possèdent des interfaces de connexion correspondantes (3).

8. Vis sans fin de transport selon la revendication 7, **caractérisée en ce que** l'interface de connexion (3) est formée par au moins une connexion à vis avec des perçages correspondants (5) dans l'élément de base (21) et dans l'élément couvrant (22).

9. Vis sans fin de transport selon une des revendications précédentes 7 et 8, **caractérisée en ce que** l'élément de base (21) et l'élément couvrant (22) possèdent en plus ou à la place de l'interface de connexion (3) au moins une connexion à forme bloquante (31) avec des bords en correspondance afin de réaliser une connexion par la forme en état monté et de façon à ce que la connexion à forme bloquante (31) est de préférence formée par des excroissances (4) en forme de chapeau sur un des éléments (21, 22) et par des évidements (41) correspondantes au niveau d'un autre des éléments (21, 22).

10. Vis sans fin de transport selon la revendication 9, **caractérisée en ce que** la connexion à forme bloquante (31) au niveau de l'élément de base (21) est formée par un U ouvert situé sur la face (211) orientée vers l'extérieur ou par une gorge ouverte vers le haut dans laquelle l'excroissance (4) en forme de chapeau peut être posée ou introduite.

11. Vis sans fin de transport selon une des revendications précédentes 9 et 10, **caractérisée en ce que** la connexion à forme bloquante (31) est formée par une connexion à tenon et mortaise, ou par des tiges, des goupilles ou des éléments similaires.

12. Vis sans fin de transport selon une des revendications précédentes, **caractérisée en ce qu'**à la face opposée de l'embout (212) de l'élément de base (21), couverte par l'élément couvrant (22) selon l'utilisation de destination, une surface entraineuse (213) est prévue, sur laquelle le segment d'un élément couvrant (22) s'appuie lors du transport de la matière à sécher.

13. Vis sans fin de transport selon une des revendications précédentes, **caractérisée en ce que** l'élément couvrant (22) possède une saillie (223) couvrant l'élément de base (21) selon l'utilisation de destination en le protégeant ainsi et/ou **en ce qu'**un élément d'adaptation (222) s'amincissant vers l'arbre (1) est prévu sur la face opposée de l'élément de base (21) en état monté au niveau de l'élément couvrant (22).

14. Vis sans fin de transport selon la revendication 13, **caractérisé en ce que** l'élément d'adaptation (222) est configuré avec un arrondi et avec une pointe orientée selon la direction de transport (1).

15. Dispositif à vis de compression pour de la matière à sécher, par exemple des déchets humides ou mouillés, comportant au moins une vis sans fin de transport (1) selon une des revendications précédentes.
